# EUROPÄISCHE PATENTANMELDUNG

(11) **EP 2 091 125 A2**
(43) Veröffentlichungstag der Anmeldung: **19.08.2009**
(21) Anmeldenummer: 09151670.8
(22) Anmeldetag: 29.01.2009
(51) Int. Cl.: H02J 7/00

(54) **Tragbares elektronisches Gerät, Ladestation, Anordnung mit einem tragbaren elektronischen Gerät und einer Ladestation und Verfahren zum Laden zweier Akkus**

(30) Priorität: 12.02.2008 DE 102008008594
(71) Anmelder: Fujitsu Siemens Computers GmbH, 80807 München (DE)
(72) Erfinder: Puschmann, Ralf, 33098 Paderborn (DE)
(74) Vertreter: Epping - Hermann - Fischer

(57) **Zusammenfassung**

Die Erfindung betrifft ein tragbares elektronisches Gerät (2), welches durch einen Akku (A) betrieben werden kann mit einer Zelle (4) zur Aufnahme des Akkus (A) und einer Wechselvorrichtung (16), die beim Einsetzen des tragbaren elektronischen Gerätes (2) in eine Ladestation (6) mit dieser zusammenwirkt, um den Akku (A), welcher sich in dem tragbaren elektronischen Gerät (2) befindet, in die Ladestation (6) zu überführen und einen Akku (B), welcher sich in der Ladestation (6) befindet, in das tragbare elektronische Gerät (2) zu überführen.

Die Erfindung betrifft ebenso eine Ladestation (6) zum Laden mindestens eines Akkus (B), welche eine Wechselvorrichtung (8/22) aufweist, die beim Einsetzen eines tragbaren elektronischen Gerätes (2), welches durch einen Akku (A) betrieben werden kann, mit diesem zusammenwirkt, um den Akku (A), welcher sich in dem tragbaren elektronischen Gerät (2) befindet, in die Ladestation (6) zu überführen und einen Akku (B), welcher sich in der Ladestation (6) befindet, in das tragbaren elektronischen Gerät (2) zu überführen.

Die Erfindung betrifft weiterhin eine Anordnung mit einem tragbaren elektronischen Gerät (2) und einer Ladestation (6).

Die Erfindung betrifft weiterhin ein Verfahren zum Laden zweier Akkus.

## Beschreibung

Die Erfindung betrifft ein tragbares elektronisches Gerät, welches durch einen Akku betrieben werden kann sowie eine Ladestation zum Laden mindestens eines Akkus, eine Anordnung mit einem tragbaren elektronischen Gerät und einer Ladestation und ein Verfahren zum Laden zweier Akkus.

Aufgabe der Erfindung ist es, die Benutzung akkubetriebener tragbarer elektronischer Geräte zu erleichtern.

Die Aufgabe wird gemäß einem ersten Aspekt der Erfindung gelöst durch ein tragbares elektronisches Gerät, welches durch einen Akku betrieben werden kann mit einer Zelle zur Aufnahme des Akkus und einer Wechselvorrichtung, die beim Einsetzen des tragbaren elektronischen Gerätes in eine Ladestation mit dieser zusammenwirkt, um den Akku, welcher sich in dem tragbaren elektronischen Gerät befindet, in die Ladestation zu überführen und einen Akku, welcher sich in der Ladestation befindet, in das tragbare elektronische Gerät zu überführen.

Vorteilhaft ist an dieser Lösung, dass ein Benutzer nicht manuell eingreifen muss, um den Akku zu wechseln.

Bevorzugt weist das tragbare elektronische Gerät eine Messvorrichtung auf, welche so ausgebildet ist, dass sie beim Einsetzen des tragbaren elektronischen Gerätes in die Ladestation den Energiegehalt des Akkus, welcher sich im tragbaren elektronischen Gerät befindet, mit dem Energiegehalt des Akkus, welcher sich in der Ladestation befindet, vergleichen kann.

Der Energiegehalt des oder der Akkus, welche sich im tragbaren elektronischen Gerät befinden, kann mittels eines oder mehrerer Anzeigeelemente dem Benutzer sichtbar wiedergegeben werden. Weiterhin kann das Ergebnis des Vergleichs mit demselben oder einem weiteren Anzeigeelement dem Benutzer angezeigt werden.

In einer vorteilhaften Weiterbildung kann die Messvorrichtung die Wechselvorrichtung im tragbaren elektronischen Gerät derart steuern, dass beim Einsetzen des tragbaren elektronischen Gerätes in die Ladestation der Akku mit weniger Energiegehalt in die Ladestation überführt wird und der Akku mit mehr Energiegehalt in das tragbare elektronische Gerät überführt wird.

Dadurch wird dem Benutzer die Entscheidung abgenommen, wann ein Akku aufgeladen werden soll beziehungsweise ein Akkuwechsel stattfinden soll. Auch kann eine kontrollierte Entladung und Ladung des Akkus in der Ladestation erfolgen.

Im vorteilhaften Fall ist das Entladen und Laden der Akkus in der Ladestation ein schnellerer Prozess als das Entladen der Akkus durch den Gebrauch im tragbaren elektronischen Gerät. Dadurch steht dem Benutzer im Normalfall ein vollgeladener Akku zur Verfügung.

In einer alternativen Ausführungsform weist das tragbare elektronische Gerät eine weitere Zelle zur Akkuaufnahme sowie eine Steuervorrichtung auf, wobei die Steuervorrichtung die Wechselvorrichtung im tragbaren elektronischen Gerät steuern kann, sodass beim Einsetzen des tragbaren elektronischen Gerätes in die Ladestation ein Akku, welcher sich in dem tragbaren elektronischen Gerät befindet, nicht in die Ladestation überführt wird sondern in diesem verbleibt, und der Akku, welcher sich in der Ladestation befindet, von der weiteren Zelle des tragbaren elektronischen Gerätes aufgenommen wird.

Dadurch stehen dem tragbaren elektronischen Gerät zwei Akkus zur Verfügung. Dies erhöht die Betriebsdauer des tragbaren elektronischen Gerätes. Vorteilhafterweise kann der Benutzer mit einem Bedienelement das Steuerelement bedienen, sodass er entscheiden kann, ob er einen oder zwei Akkus in das tragbare elektronische Gerät aufnehmen möchte. Die Aufnahme geschieht mittels der Wechselvorrichtung.

Wird das tragbare elektronische Gerät mit zwei Akkus in die Ladestation eingesetzt, so nimmt die Ladestation bevorzugt den Akku, welcher weniger Energie aufweist, auf, und es verbleibt der Akku, welcher mehr Energie aufweist, in dem tragbaren elektronischen Gerät.

Gemäß einem zweiten Aspekt der Erfindung wird die Aufgabe gelöst durch eine Ladestation zum Laden mindestens eines Akkus, welche eine Wechselvorrichtung aufweist, die beim Einsetzen eines tragbaren elektronischen Gerätes, welches durch einen Akku betrieben werden kann, mit dem tragbaren elektronischen Gerät zusammenwirkt, um den Akku, welcher sich in dem tragbaren elektronischen Gerät befindet, in die Ladestation zu überführen und einen Akku, welcher sich in der Ladestation befindet, in das tragbare elektronische Gerät zu überführen.

In dieser Ausführungsform ist das tragbare elektronische Gerät handlicher und leichter, da der aktive Teil der Wechselvorrichtung oder die gesamte Wechselvorrichtung in die Ladestation integriert ist.

In einer weiteren vorteilhaften Ausführungsform weist die Ladestation eine Aufnahmevorrichtung zur Aufnahme des tragbaren elektronischen Gerätes auf. Wenn das tragbare elektronische Gerät in die Aufnahmevorrichtung eingesetzt ist, können der oder die Akkus, welche sich im tragbaren elektronischen Gerät befinden, geladen werden.

Durch die Aufnahmevorrichtung wird die Betriebsdauer des tragbaren elektronischen Gerätes verlängert, da sowohl die Akkus, welche sich im tragbaren elektronischen Gerät befinden, als auch jene, welche sich in der Ladestation befinden, kontrolliert ent- und geladen werden können.

In einer weiteren günstigen Ausgestaltung weist die Ladestation eine Messvorrichtung auf, welche so ausgebildet ist, dass sie beim Einsetzen des tragbaren elektronischen Gerätes in die Ladestation den Energiegehalte des Akkus, welcher sich im tragbaren elektronischen Gerät befindet, mit dem Energiegehalt des Akkus, welcher sich in der Ladestation befindet, vergleichen kann.

Der Energiegehalt der Akkus kann mittels Anzeigeelementen dem Benutzer angezeigt werden. In vorteilhaften Ausführungsformen kann auch das Ergebnis des Vergleichs dem Benutzer angezeigt werden.

Es ist von Vorteil, wenn die Messvorrichtung die Wechselvorrichtung in der Ladestation derart steuert, dass beim Einsetzen des tragbaren elektronischen Gerätes in die Ladestation der Akku mit weniger Energiegehalt in die Ladestation überführt wird und der Akku mit mehr Energiegehalt in das tragbare elektronische Gerät überführt wird.

Dadurch wird die Betriebsdauer des tragbaren elektronischen Gerätes verlängert. Weiterhin kann der Akku kontrolliert ent-und geladen werden. Hierdurch kann ein vorzeitiges Altern des Akkus und der bekannte Memoryeffekt verhindert werden.

Gemäß einem dritten Aspekt der Erfindung wird die Aufgabe ebenso gelöst durch eine Anordnung mit einem tragbaren elektronischen Gerät insbesondere nach Anspruch 1 und einer Ladestation insbesondere nach Anspruch 5. Die Wechselvorrichtung kann zum Teil im tragbaren elektronischen Gerät, zum Teil in der Ladestation ausgebildet sein. Alternativ kann die Wechselvorrichtung ganz im tragbaren elektronischen Gerät oder auch ganz in der Ladestation ausgebildet sein.

Gemäß einem vierten Aspekt der Erfindung wird die Aufgabe gelöst durch ein Verfahren zum Laden zweier Akkus für die Verwendung in einem tragbaren elektronischen Gerät, wobei bei dem Einsetzen des tragbaren elektronischen Gerätes mit einem ersten Akku in eine Ladestation überprüft wird, ob ein zweiter Akku sich in der Ladestation befindet und falls der zweite Akku sich in der Ladestation befindet, der Energiegehalt der Akkus gemessen und verglichen wird und der Akku mit geringerem Energiegehalt entladen wird und danach wieder vollgeladen wird und seine Ladung erhalten wird und gleichzeitig der Akku mit mehr Energiegehalt schnell geladen wird und seine Ladung erhalten wird. Vorteilhaft ist, dass durch den Schnellladeprozess kurzfristig ein vollgeladener Akku zur Verfügung steht und durch den Entladeprozess der Memoryeffekt verhindert wird.

In einer vorteilhaften Weiterbildung wird periodisch überprüft, ob der Akku, welcher bei der Energiegehaltsmessung die geringere Energie aufwies, vollgeladen ist und wenn dies der Fall ist, wird der Akku, welcher bei der Energiegehaltsmessung mehr Energie aufwies, wieder entladen bis er leer ist und danach wieder aufgeladen und seine Ladung erhalten.

Durch diese Maßnahme kann eine weitere Möglichkeit der Akkupflege in das Verfahren aufgenommen werden, welche den Memoryeffekt verhindert.

Es ist von Vorteil, wenn beim Herausnehmen des tragbaren elektronischen Gerätes aus der Ladestation durch den Benutzer der Akku, welcher mehr Energiegehalt aufweist, in das tragbare elektronische Gerät überführt wird und der Akku, welcher weniger Energiegehalt aufweist, in der Ladestation verbleibt.

In einer weiteren Ausführungsform findet eine Überprüfung statt, ob eine Wartezeit eingestellt werden soll, falls zwei Akkus von dem Benutzer angefordert werden, und falls ja, werden beide Akkus schnell geladen, wobei in dem Fall, dass einer oder beide Akkus vollgeladen sind, dessen oder deren Ladung erhalten wird. Bei dem Herausnehmen des tragbaren elektronischen Geräts aus der Ladestation werden beide Akkus mit dem tragbaren elektronischen Gerät mitgeführt.

Der Nutzer kann die Wartezeit einstellen, wobei der Schnellladeprozess an die Wartezeit angepasst ist. Beispielsweise kann mit entsprechend höheren Strömen aufgeladen werden, je kürzer die Wartezeit ist.

Nachfolgend werden weitere Vorteile der Erfindung anhand mehrerer Ausführungsbeispiele erläutert.

### In den Zeichnungen zeigen:

- Figur 1: eine schematische Schnittansicht einer Anordnung mit einem tragbaren elektronischen Gerät einer Ladestation und einer Wechselvorrichtung,
- Figur 2: die Anordnung gemäß Figur 1 mit aktiver Wechselvorrichtung,
- Figur 3: die Anordnung gemäß Figur 2 mit um 90° rotierter Wechselvorrichtung,
- Figur 4: die Anordnung gemäß Figur 2 mit um 180° rotierter Wechselvorrichtung,
- Figur 5: eine schematische Schnittansicht eines zweiten Ausführungsbeispiels einer Anordnung mit einem tragbaren elektronischen Gerät und einer Ladestation,
- Figur 6: die Anordnung gemäß Figur 5 mit eingesetztem tragbaren elektronischen Gerät,

- Figur 7: die Anordnung gemäß Figur 5 nach einer Akkuaufnahme des tragbaren elektronischen Gerätes,
- Figur 8: eine schematische Schnittansicht eines weiteren Ausführungsbeispiels einer Anordnung mit einem tragbaren elektronischen Gerät und einer Ladestation.
- Figur 9A: ein Flussdiagramm eines Verfahrens zum Laden zweier Akkus,
- Figur 9B: ein zweites Flussdiagramm einer Erweiterung des Verfahrens zum Laden zweier Akkus und
- Figur 9C: ein drittes Flussdiagramm einer Erweiterung des Verfahrens zum Laden zweier Akkus.

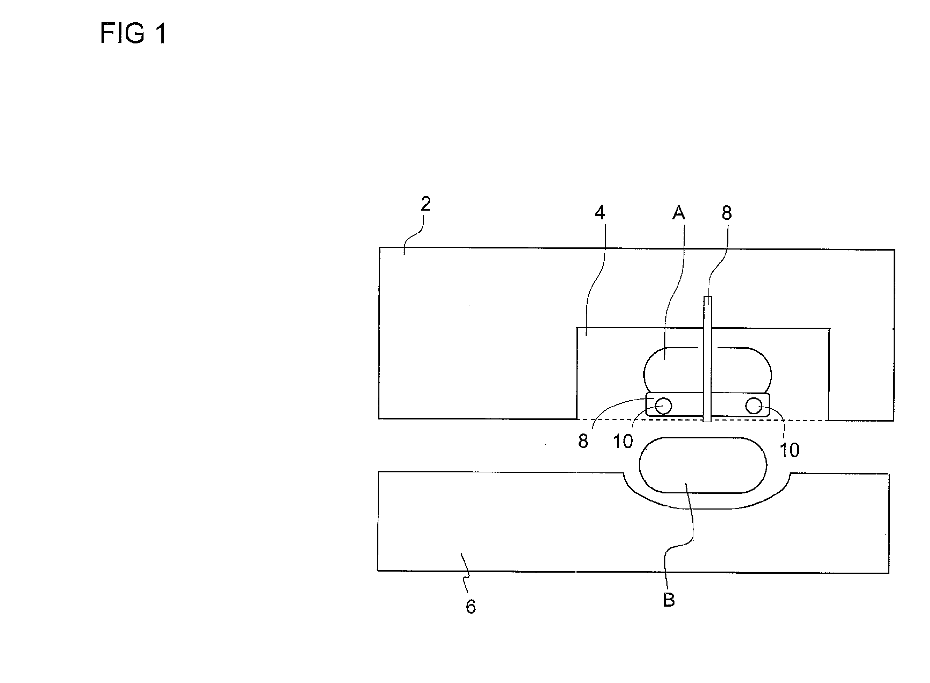

In Figur 1 ist ein tragbares elektronisches Gerät 2 dargestellt, das eine Zelle 4 aufweist, in welcher sich ein Akku A befindet. Weiterhin sind ein zweiter Akku B, der sich in einem Ladegerät 6 befindet, und eine Wechselvorrichtung 8 dargestellt.

Die Wechselvorrichtung 8 kann elektronisch und/oder mechanisch gesteuert werden. Im dargestellten Ausführungsbeispiel ist sie am tragbaren elektronischen Gerät 2 angeordnet. In einer alternativen Ausführungsform kann die Wechselvorrichtung 8 an der Ladestation 6 angeordnet sein. Letztere Ausführungsform besitzt den Vorteil, dass in diesem Fall das tragbare elektronische Gerät 2 leichter ist.

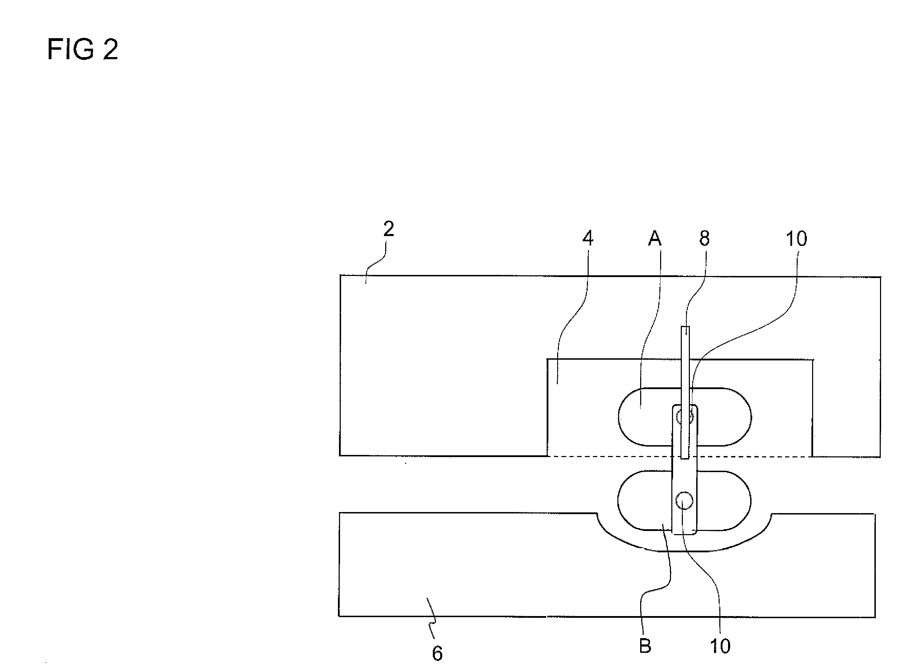

Figur 2 stellt die Situation dar, wie das tragbare elektronische Gerät 2 in die Ladestation 6 eingesetzt ist, um beispielsweise den leeren Akku A gegen den vollen Akku B zu ersetzen. Zu diesem Zweck muss der leere Akku A, welcher sich in dem tragbaren elektronischen Gerät 2 befindet, in die Ladestation 6 überführt werden und der volle Akku B, welcher sich in der Ladestation 6 befindet, in das tragbare elektronische Gerät 2 überführt werden.

Die Wechselvorrichtung 8 hält den Akku A und den Akku B mittels Befestigungsvorrichtungen 10 fest.

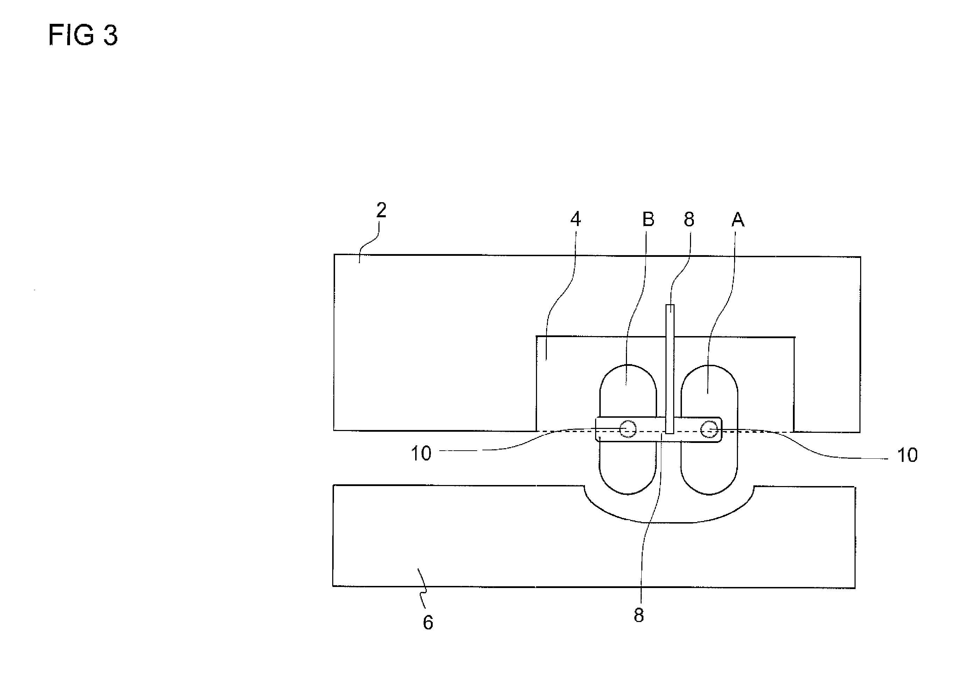

In Figur 3 ist die Wechselvorrichtung 8 bezüglich Figur 2 um 90° nach rechts gedreht. Der Akku A und der Akku B, welche durch die Befestigungsvorrichtungen 10 an der Wechselvorrichtung 8 festgehalten werden, sind ebenfalls um 90° gedreht, gegenüber der Anordnung in Figur 1. Das Drehmoment wird aus der Kraft gewonnen, welche für das Einsetzen oder Andocken des tragbaren elektronischen Geräts 2 an die Ladestation 6 aufgewendet wird. Die geradlinige Bewegung des Einsetzens wird beispielsweise durch Federelemente (nicht dargestellt) mechanisch in eine Drehbewegung der Wechselvorrichtung 8 umgesetzt.

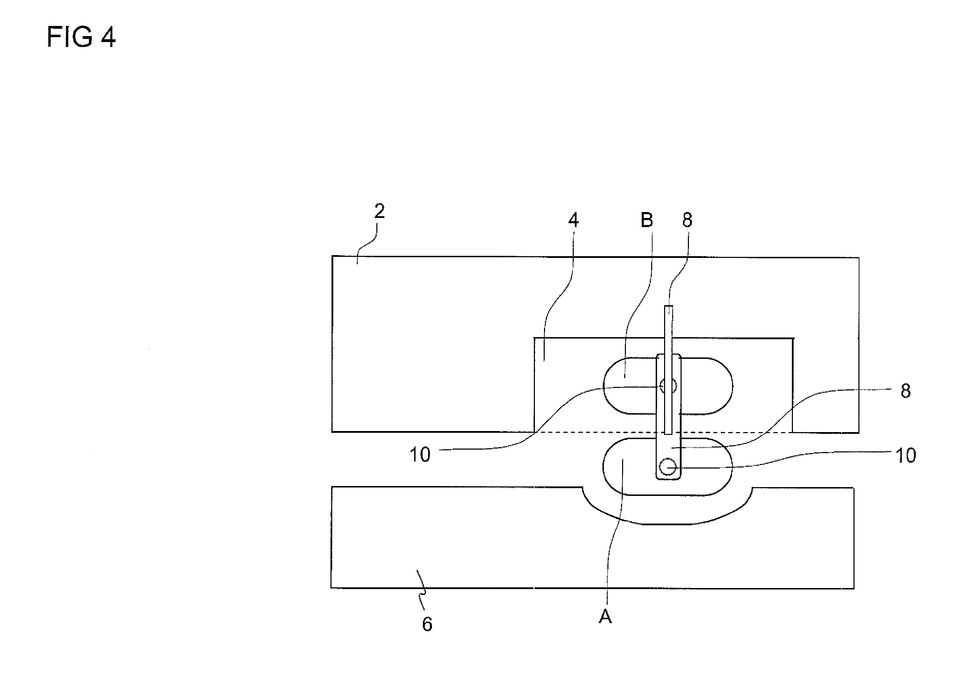

Figur 4 zeigt die Wechselvorrichtung 8, welche gegenüber der Anordnung aus Figur 3 um weitere 90° gedreht ist. Der Akku B befindet sich in der Zelle 4 des tragbaren elektronischen Gerätes 2. Der Akku A befindet sich in der Ladestation 6. Ein Akkuwechsel hat stattgefunden. Beim Herausnehmen des tragbaren elektronischen Gerätes 2 aus der Ladestation 6 lösen sich die Befestigungsvorrichtungen 10 beim Akku B und der Akku B verbleibt in der Ladestation 6.

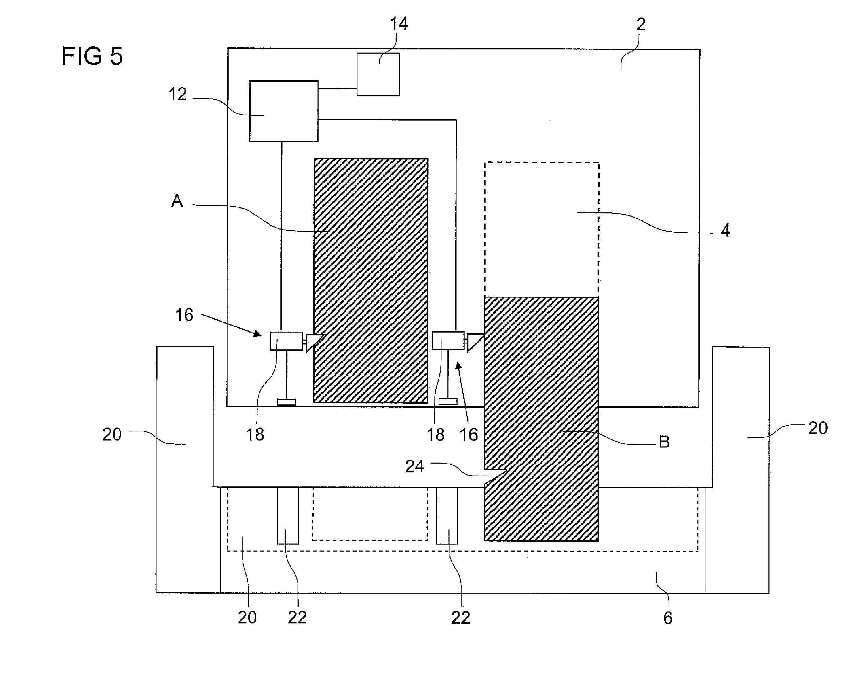

In den Figuren 5 bis 7 ist eine alternative Ausführungsform einer Anordnung mit einem tragbaren elektronischen Gerät 2 und einer Ladestation 6 dargestellt, in welcher das tragbare elektronische Gerät 2 zwei Akkus A und B aufnehmen kann.

Das tragbare elektronische Gerät 2 weist hierzu zwei Zellen 4 auf, in welchen der Akku A und der Akku B aufgenommen werden können. Darüber hinaus weist das tragbare elektronische Gerät 2 ein Steuerelement 12 auf, welches an ein Bedienelement 14 gekoppelt ist. Das Bedienelement 14 kann als Taste an dem tragbaren elektronischen Gerät 2 ausgebildet sein. Alternativ kann das Steuerelement 12 so ausgebildet sein, dass es über eine Software des tragbaren elektronischen Gerätes 2 gesteuert wird und das Bedienelement 14 somit in die Funktionalitäten des tragbaren elektronischen Gerätes 2 integriert ist.

Die Ladestation 6 weist eine Aufnahmevorrichtung 20 auf, in welche das tragbare elektronische Gerät 2 eingesetzt werden kann. Die Aufnahmevorrichtung 20 wirkt mit dem tragbaren elektronischen Gerät 2 so zusammen, dass das tragbare elektronische Gerät 2 nach dem Einsetzen fest gehalten wird. Das tragbare elektronische Gerät 2 befindet sich normalerweise in der Aufnahmevorrichtung 20 der Ladestation 6, wenn es nicht benutzt wird.

Weiterhin weist das tragbare elektronische Gerät 2 eine Wechselvorrichtung 16 pro Zelle 4 auf. Die Wechselvorrichtungen 16 umfassen je ein Halteelement 18 und mechanische oder elektronische Schalter. Die Wechselvorrichtung 16 wird von dem Steuerelement 12 gesteuert.

Im dargestellten Ausführungsbeispiel wirkt die Wechselvorrichtung 16 im tragbaren elektronischen Gerät 2 mit einer weiteren Wechselvorrichtung 22 in der Ladestation 6 zusammen. Die gesamte Wechselvorrichtung 16/22 ist dabei so ausgebildet, dass sie den Akku A, welcher sich in dem tragbaren elektronischen Gerät 2 befindet, in die Ladestation 6 überführt und den Akku B, welcher sich in der Ladestation 6 befindet, in das tragbare elektronische Gerät 2 überführt.

In Figur 5 ist die Situation dargestellt, wie das tragbare elektronische Gerät 2 in die Ladestation 6 eingesetzt wird, um den Akkuwechsel durchzuführen. Der Akku A befindet sich dazu in dem tragbaren elektronischen Gerät 2. Der Akku B befindet sich in der Ladestation 6.

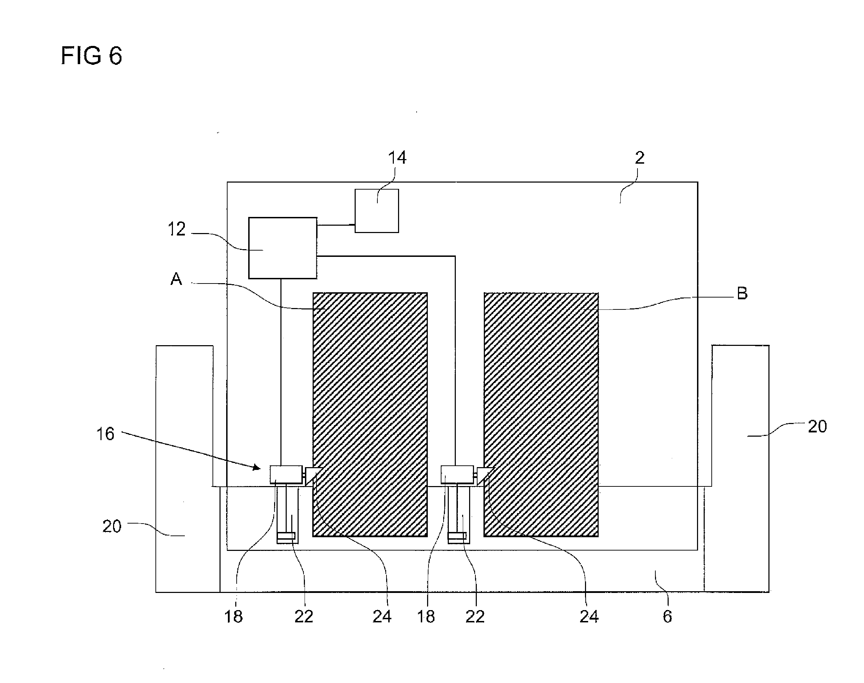

In Figur 6 ist das tragbare elektronische Gerät 2 in die Aufnahmevorrichtung 20 der Ladestation 6 eingesetzt. Die Wechselvorrichtung 16 im tragbaren elektronischen Gerät 2 wirkt nun mit der Wechselvorrichtung 22 in der Ladestation 6 zusammen. Sowohl der Akku A als auch der Akku B sind in die Zellen 4 des tragbaren elektronischen Gerätes 2 eingesetzt.

Das Steuerelement 12 steuert die Wechselvorrichtung 16 im tragbaren elektronischen Gerät 2, sodass die Haltemittel 18 in Aussparungen 24 der Akkus A und B greifen können. Dadurch kann einer der Akkus A oder B oder können beide Akkus A und B von dem tragbaren elektronischen Gerät 2 fest gehalten werden. Auf diese Weise kann ein Benutzer entscheiden, ob er einen Akku A oder B oder ob er 2 Akkus A und B nutzen möchte.

Beide Haltemittel 18 sind in die Aussparungen 24 eingeführt. Wird das tragbare elektronische Gerät 2 vom Benutzer aus der Ladestation 6 heraus genommen, dann verbleiben beide Akkus A und B in dem tragbaren elektronischen Gerät 2.

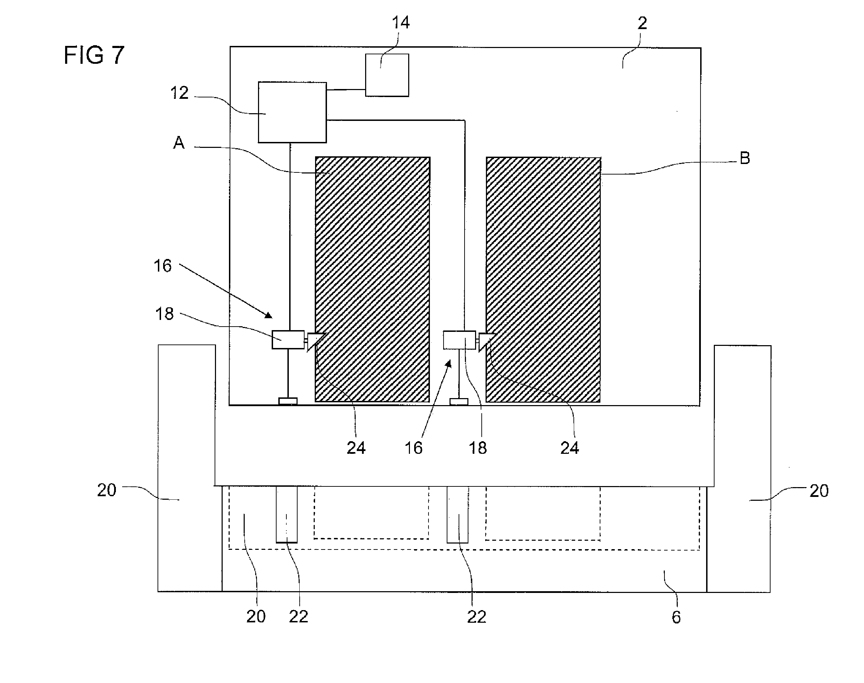

In Figur 7 ist das tragbare elektronische Gerät 2 aus der Ladestation 6 herausgezogen. Die Akkus A und B befinden sich beide in den Zellen 4 des tragbaren elektronischen Gerätes 2. Es wird beispielsweise erst der Akku A genutzt und, nachdem dieser leer ist, wird der Akku B genutzt. Das tragbare elektronische Gerät 2 kann so über längere Zeit intensiv genutzt werden.

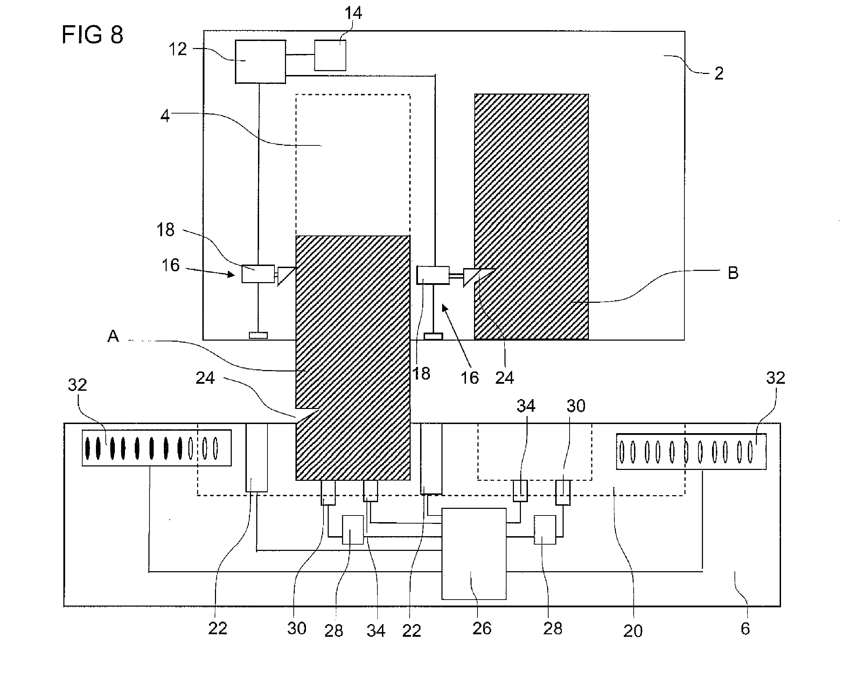

Figur 8 zeigt eine weitere Ausführungsform des tragbaren elektronischen Gerätes 2 und der Ladestation 6 in schematischer Schnittdarstellung.

Die Ladestation 6 weist ein integriertes Schaltelement 26 auf, welches elektronisch über einen A/D-Wandler 28 mit einer Energiegehaltsmessvorrichtung 30 verbunden ist. Der A/D-Wandler 28 kann alternativ als Teil des integrierten Schaltelements 26 ausgebildet sein. Das integrierte Schaltelement 26 ist außerdem elektrisch mit Anzeigeelementen 32 verbunden. Die Anzeigeelemente 32 können beispielsweise als rote und grüne LEDs ausgebildet sein, mit welchen ein Zahlenbereich dargestellt werden kann. Weiterhin ist das integrierte Schaltelement 26 mit einer Akkuladevorrichtung 34 und mit der Wechselvorrichtung 22 in der Ladestation 6 verbunden.

In Figur 8 ist die Energiegehaltsmessvorrichtung 30 an den Akku A gekoppelt. Wird der Akku B eingesetzt, so ist auch der Akku B mit der Energiegehaltsmessvorrichtung 30 gekoppelt. Die Energiegehaltsmessvorrichtung 30 ist so ausgebildet, dass sie den Energiegehalt der Akkus A und B messen kann. Das Messergebnis wird über den A/D-Wandler 28 in ein digitales Signal umgewandelt, von dem integrierten Schaltelement 26 verarbeitet und über die Anzeigeelemente 32 dargestellt.

Wenn das tragbare elektronische Gerät 2 in die Ladestation 6 eingesetzt wird, vergleicht das integrierte Schaltelement 26 den Energiegehalt der Akkus A und B. Die Anzeigeelemente 32 können das Ergebnis darstellen, beispielsweise können sie durch eine grüne und eine weitere rote LED anzeigen, welcher Akku A oder B mehr Energiegehalt aufweist.

Das integrierte Schaltelement 26 steuert die Wechselvorrichtung 22 so, dass der Akku A oder B, welcher mehr Energiegehalt hat, bei dem Herausnehmen des tragbaren elektronischen Gerätes 2 aus der Ladestation 6 in das tragbare elektronische Gerät 2 überführt wird und der Akku A oder B, welcher weniger Energiegehalt aufweist, in der Ladestation 6 gelassen wird.

In einer weiteren Ausführungsform lassen sich die Wechselvorrichtungen 16/22 mittels des Steuerelements 12 zusätzlich manuell steuern.

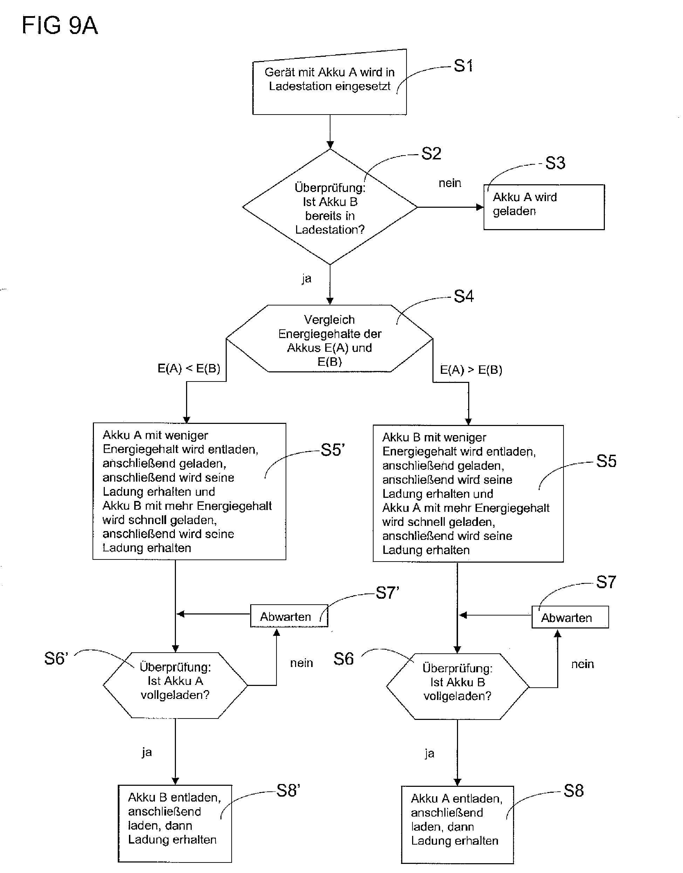

In Figur 9A ist ein Verfahren zum Laden eines oder mehrerer Akkus in Form eines Flussdiagramms dargestellt.

In einem ersten Schritt S1 wird das tragbare elektronische Gerät 2, hier bezeichnet als Gerät, mit dem Akku A in die Ladestation 6 eingesetzt. Der Schritt S1 wird von dem Benutzer des tragbaren elektronischen Gerätes durchgeführt.

In einem zweiten Schritt S2 wird überprüft, ob ein zweiter Akku B bereits in die Ladestation eingesetzt ist. Die Überprüfung wird entweder von einer Elektronik des tragbaren elektronischen Gerätes 2 oder von einer Elektronik der Ladestation 6 durchgeführt.

Ist das Ergebnis der Überprüfung negativ, so wird in einem dritten Schritt S3 der Akku A in der Ladestation 6 aufgeladen.

Ist das Ergebnis der Überprüfung positiv, so wird in einem vierten Schritt S4 ein Vergleich der Ladezustände der Akkus A und B vorgenommen. Zum Vergleich wird eine Energiegehaltsmessung durchgeführt, welche beispielsweise differentiell die Spannung des Akkus A mit der Spannung des Akkus B vergleicht. Die Messung wird entweder durch eine Energiegehaltsmessvorrichtung am tragbaren elektronischen Gerät 2 oder durch die Energiegehaltsmessvorrichtung 30 an der Ladestation 6 durchgeführt.

Wenn der Energiegehalt des Akkus B, E(B), kleiner als der Energiegehalt des Akkus A, E(A), ist, dann wird in einem fünften Schritt S5 der Akku B entladen, anschließend geladen und wenn der Akku B vollgeladen ist, wird seine Ladung erhalten. Gleichzeitig wird der Akku A mit mehr Energiegehalt schnell geladen und anschließend wird seine Ladung erhalten. Das Schnellladen geschieht mit hohen Strömen.

In einem sechsten Schritt S6 wird überprüft, ob der Akku B vollgeladen ist. Ist das Ergebnis der Überprüfung negativ, so wird in einem siebten Schritt S7 abgewartet und nach einer Zeit wieder zu dem Schritt S6 zurückgegangen.

Ist das Ergebnis der Überprüfung positiv, so wird in einem achten Schritt S8 der Akku A entladen und anschließend geladen, dann wird seine Ladung erhalten.

Wenn umgekehrt nach dem Schritt S4 der Energiegehalt des Akkus A, E(A), kleiner als der Energiegehalt des Akkus B, E(B), ist, wird in einem Schritt S5' der Akku A entladen, anschließend geladen und wenn der Akku A vollgeladen ist, wird seine Ladung erhalten. Gleichzeitig wird der Akku B mit mehr Energiegehalt schnell geladen und anschließend wird seine Ladung erhalten.

In einem Schritt S6' wird dann überprüft, ob der Akku A vollgeladen ist. Ist das Ergebnis der Überprüfung negativ, so wird in einem Schritt S7' abgewartet und nach einer Zeit wieder zu dem Schritt S6' übergegangen.

Ist das Ergebnis der Überprüfung positiv, so wird in einem Schritt S8' der Akku B entladen und anschließend geladen, dann wird seine Ladung erhalten.

Wenn sich beim Einsetzen des tragbaren elektronischen Gerätes 2 in die Ladestation 6 beide Akkus A und B in dem tragbaren elektronischen Gerät 2 befinden so wird das Verfahren ab dem Schritt S4 durchgeführt, in welchem ein Vergleich der Ladezustände der Akkus A und B vorgenommen wird.

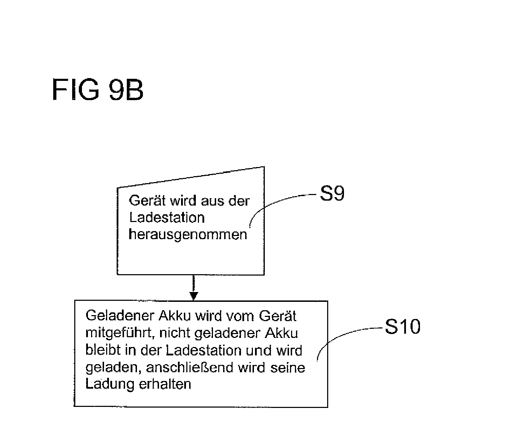

In Figur 9B ist ein weiteres Flussdiagramm mit einem weiteren Verfahrensschritt dargestellt. In einem Schritt S9 wird das tragbare elektronische Gerät 2 aus der Ladestation 6 herausgezogen. Der Schritt S9 wird vom Benutzer des tragbaren elektronischen Geräts 2 durchgeführt.

In einem Schritt S10 verbleibt der Akku A oder B, welcher weniger Energiegehalt aufweist, in der Ladestation 6 und wird geladen. Wenn der in der Ladestation 6 verbliebene Akku A oder B vollgeladen ist, wird seine Ladung erhalten.

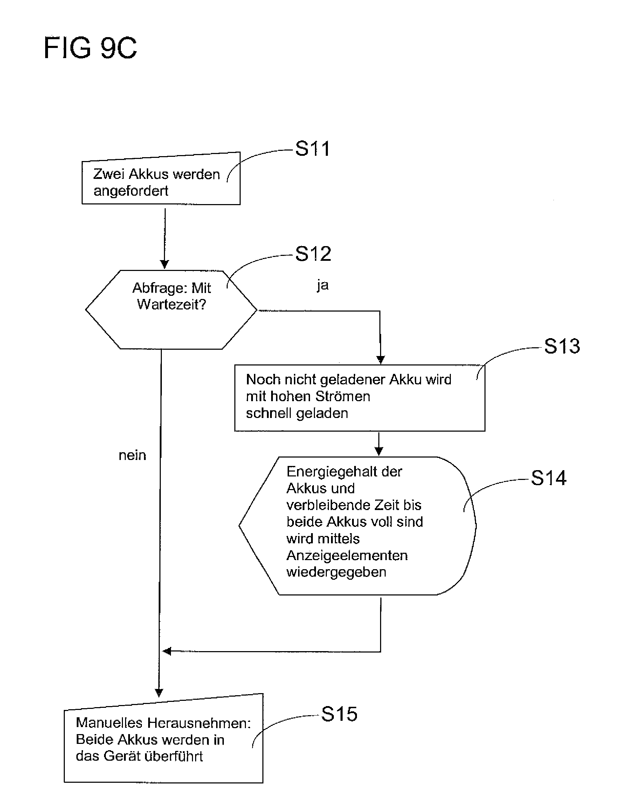

In Figur 9C sind weitere Verfahrensschritte in einem Flussdiagramm dargestellt. In einem Schritt S11 werden zwei Akkus A und B angefordert. Der Benutzer des tragbaren elektronischen Geräts 2 kann die Anforderung beispielsweise über das Bedienelement 14 durchführen, welches über das Steuerelement 12 die Wechselvorrichtung 8 steuert. Dabei können Bedienelement 14 und Steuerelement 12 an dem tragbaren elektronischen Gerät 2 angeordnet sein oder an der Ladestation 6 angeordnet sein.

In einem weiteren Schritt S12 geschieht eine Abfrage, ob eine Wartezeit zur Verfügung steht. Die Abfrage kann dabei beispielsweise über ein Display dargestellt werden, welches am tragbaren elektronischen Gerät 2 oder an der Ladestation 6 angeordnet ist. Die Eingabe des Benutzers kann positiv oder negativ sein oder sie kann eine Zeitangabe sein. Die Antwort auf die Abfrage kann durch den Benutzer mittels des Bedienelements 14 geschehen.

Ist die Eingabe positiv oder eine Zeitangabe, dann wird in einem Schritt S13 der noch nicht vollgeladene Akku A oder B oder beide nicht vollgeladenen Akkus A und B mit hohen Strömen schnell geladen. Mittels Anzeigeelementen 32 wird in einem Schritt S14 der oder die Energiegehalte der Akkus A und B dargestellt. Weiterhin wird dargestellt, wie viel Zeit verbleibt, bis beide Akkus A und B voll sind. Wenn die Akkus A oder B voll sind, wird ihre Ladung erhalten.

Ist die Eingabe negativ, erfolgt ein manuelles Herausnehmen des tragbaren elektronischen Geräts 2 aus der Ladestation 6 durch den Benutzer. In einem Schritt S15 werden dann beide Akkus A und B in das tragbare elektronische Gerät 2 überführt.

Auch während der Schritte S13 oder S14 kann ein Benutzer den Schritt S15 vollziehen.

Die Erfindung umfasst jede Kombination von Merkmalen, was insbesondere jede Kombination von Merkmalen in den Patentansprüchen beinhaltet, auch wenn diese Kombination von Merkmalen nicht explizit in den Patentansprüchen oder Ausführungsbeispielen angegeben ist. Dies betrifft insbesondere Merkmale, welche einzig dem tragbaren elektronischen Gerät oder der Ladestation zugeordnet wurden, und welche sich beispielsweise mit Hilfe des integrierten Schaltelements leicht dem jeweilig anderen zuordnen lassen.

### Bezugszeichenliste

- Akku A: Akku B

- 2: tragbares elektronisches Gerät
- 4: Zelle
- 6: Ladestation
- 8: Wechselvorrichtung
- 10: Befestigungselemente
- 12: Steuerelement
- 14: Bedienelement
- 16: Wechselvorrichtung im tragbaren elektronischen Gerät
- 18: Haltemittel
- 20: Aufnahmevorrichtung
- 22: Wechselvorrichtung in der Ladestation
- 24: Aussparung
- 26: integriertes Schaltelement
- 28: A/D-Wandler
- 30: Energiegehaltsmessvorrichtung
- 32: Anzeigeelement
- 34: Akkuladevorrichtung

- S1 - S15: Verfahrensschritte
- S5' - S8': Verfahrensschritte

## Patentansprüche

1. Tragbares elektronisches Gerät (2), welches durch einen Akku (A) betrieben werden kann, mit einer Zelle (4) zur Aufnahme des Akkus (A) und einer Wechselvorrichtung (8/16), die beim Einsetzen des tragbaren elektronischen Gerätes (2) in eine Ladestation (6) mit dieser zusammenwirkt, um den Akku (A), welcher sich in dem tragbaren elektronischen Gerät (2) befindet, in die Ladestation (6) zu überführen, und einen Akku (B), welcher sich in der Ladestation (6) befindet, in das tragbare elektronische Gerät (2) zu überführen.

2. Tragbares elektronisches Gerät (2) nach Patentanspruch 1,
**dadurch gekennzeichnet, dass**
das tragbare elektronische Gerät (2) eine Messvorrichtung (14) aufweist, welche so ausgebildet ist, dass sie beim Einsetzen des tragbaren elektronischen Gerätes (2) in die Ladestation (6) den Energiegehalt des Akkus (A), welcher sich im tragbaren elektronischen Gerät (2) befindet, mit dem Energiegehalt des Akkus (B), welcher sich in der Ladestation (6) befindet, vergleichen kann.

3. Tragbares elektronisches Gerät (2) nach Patentanspruch 2,
**dadurch gekennzeichnet, dass**
die Messvorrichtung (14) die Wechselvorrichtung (8/16) so steuert, dass beim Einsetzen des tragbaren elektronischen Gerätes (2) in die Ladestation (6) der Akku (A) oder der Akku (B) mit weniger Energiegehalt in die Ladestation (6) überführt wird und der Akku (A) oder der Akku (B) mit mehr Energiegehalt in das tragbare elektronische Gerät (2) überführt wird.

4. Tragbares elektronisches Gerät (2) nach einem der Patentansprüche 1 bis 3,
**dadurch gekennzeichnet, dass**
das tragbare elektronische Gerät (2) eine weitere Zelle (4) zur Akkuaufnahme sowie ein Steuerelement (12) aufweist, wobei das Steuerelement (12) die Wechselvorrichtung (8/16) steuern kann, sodass beim Einsetzen des tragbaren elektronischen Gerätes (2) in die Ladestation (6) ein Akku (A), welcher sich in dem tragbaren elektronischen Gerät (2) befindet, nicht in die Ladestation (6) überführt wird sondern in diesem verbleibt, und der Akku (B), welcher sich in der Ladestation (6) befindet, von der weiteren Zelle (4) des tragbaren elektronischen Gerätes (2) aufgenommen wird.

5. Ladestation (6) zum Laden mindestens eines Akkus (B), welche eine Wechselvorrichtung (8/22) aufweist, die beim Einsetzen eines tragbaren elektronischen Gerätes (2), welches durch einen Akku (A) betrieben werden kann, mit dem tragbaren elektronischen Gerät (2) zusammenwirkt, um den Akku (A), welcher sich in dem tragbaren elektronischen Gerät (2) befindet, in die Ladestation (6) zu überführen und einen Akku (B), welcher sich in der Ladestation (6) befindet, in das tragbare elektronische Gerät (2) zu überführen.

6. Ladestation (6) nach Patentanspruch 5,
**dadurch gekennzeichnet, dass**
die Ladestation (6) eine Aufnahmevorrichtung (20) zur Aufnahme des tragbaren elektronischen Gerätes (2) aufweist und dass der Akku (A), welcher sich im tragbaren elektronischen Gerät (2) befindet, dann geladen wird, wenn das tragbare elektronische Gerät (2) in die Aufnahmevorrichtung (20) eingesetzt ist.

7. Ladestation (6) nach einem der Patentansprüche 5 oder 6,
**dadurch gekennzeichnet, dass**
die Ladestation (6) eine Messvorrichtung (30) aufweist, welche so ausgebildet ist, dass sie beim Einsetzen des tragbaren elektronischen Gerätes (2) in die Ladestation (6) den Energiegehalt des Akkus (A), welcher sich im tragbaren elektronischen Gerät (2) befindet, mit dem Energiegehalt des Akkus (B), welcher sich in der Ladestation (6) befindet, vergleichen kann.

8. Ladestation (6) nach Patentanspruch 7,
**dadurch gekennzeichnet, dass**
die Messvorrichtung (30) die Wechselvorrichtung (8/22) so steuert, dass beim Einsetzen des tragbaren elektronischen Gerätes (2) in die Ladestation (6) der Akku (A) oder der Akku (B) mit weniger Energiegehalt in die Ladestation (6) überführt wird und der Akku (A) oder der Akku (B) mit mehr Energiegehalt in das tragbare elektronische Gerät (2) überführt wird.

9. Anordnung mit einem tragbaren elektronischen Gerät (2) nach einem der Patentansprüche 1 bis 4 und einer Ladestation (6) nach einem der Patentansprüche 5 bis 8, wobei die Wechselvorrichtung (16) im tragbaren elektronischen Gerät (2) mit der Wechselvorrichtung (8/22) in der Ladestation (6) zusammenwirkt.

10. Anordnung mit einem tragbaren elektronischen Gerät (2) nach einem der Patentansprüche 1 bis 4 und einer Ladestation (6).

11. Anordnung mit einem tragbaren elektronischen Gerät (2) welches durch einen Akku (A) betrieben werden kann, und einer Ladestation (6) nach einem der Patentansprüche 5 bis 8.

12. Verfahren zum Laden zweier Akkus (A und B) für die Verwendung in einem tragbaren elektronischen Gerät (2) mit den Schritten:
- Einsetzen des tragbaren elektronischen Gerätes (2) mit einem ersten Akku (A) in eine Ladestation (6),
- Überprüfen, ob ein zweiter Akku (B) in der Ladestation (6) angeordnet ist,
- falls der zweite Akku (B) in der Ladestation (6) angeordnet ist,
- Vergleichen des Energiegehalts der Akkus (A und B),
- falls der Energiegehalt des ersten Akkus (A) geringer ist als der Energiegehalt des zweiten Akkus (B),
- Entladen des ersten Akkus (A) bis der erste Akku (A) leer ist, anschließend Laden des ersten Akkus (A) bis der erste Akku (A) vollgeladen ist, anschließend Erhalten der Ladung des ersten Akkus (A),
- schnelles Laden des zweiten Akkus (B) bis der zweite Akku (B) vollgeladen ist, anschließend Erhalten der Ladung des zweiten Akkus (B),
- falls der Energiegehalt des zweiten Akkus (B) geringer ist als der Energiegehalt des ersten Akkus (A),
- Entladen des zweiten Akkus (B) bis der zweite Akku (B) leer ist, anschließend Laden des zweiten Akkus (B) bis der zweite Akku (B) vollgeladen ist, anschließend Erhalten der Ladung des zweiten Akkus (B),
- schnelles Laden des ersten Akkus (A) bis der erste Akku (A) vollgeladen ist, anschließend Erhalten der Ladung des ersten Akkus (A) und
- falls kein zweiter Akku (B) in der Ladestation (6) angeordnet ist, Laden des ersten Akkus (A).

13. Verfahren nach Patentanspruch 12,
**dadurch gekennzeichnet, dass**
falls beim Vergleich des Energiegehalts der Akkus (A und B), der Energiegehalt des ersten Akkus (A) geringer ist als der Energiegehalt des zweiten Akkus (B),
nachdem der zweite Akku (B) schnell geladen wurde und der erste Akku (A) erst entladen und dann aufgeladen wurde, periodisch überprüft wird, ob der erste Akku (A) vollgeladen geladen ist und falls der erste Akku (A) vollgeladen geladen ist, der zweite Akku (B) entladen wird, bis der zweite Akku (B) leer ist, anschließend geladen wird, bis der zweite Akku (B) vollgeladen ist, anschließend die Ladung des zweiten Akkus (B) erhalten wird und falls beim Vergleich des Energiegehalts der Akkus (A und B), der Energiegehalt des zweiten Akkus (B) geringer ist als der Energiegehalt des ersten Akkus (A),
nachdem der erste Akku (A) schnell geladen wurde und der zweite Akku (B) erst entladen und dann aufgeladen wurde, periodisch überprüft wird, ob der zweite Akku (B) vollgeladen geladen ist und falls der zweite Akku (B) vollgeladen geladen ist, der erste Akku (A) entladen wird, bis der erste Akku (A) leer ist, anschließend geladen wird, bis der erste Akku (A) vollgeladen ist, anschließend die Ladung des ersten Akkus (A) erhalten wird.

14. Verfahren nach Patentanspruch 12 oder 13,
**dadurch gekennzeichnet, dass**
bei einem Herausnehmen des tragbaren elektronischen Gerätes (2) der Akku (A oder B), welcher mehr Energiegehalt aufweist, in das tragbare elektronische Gerät (2) überführt wird und der Akku (A oder B), welcher weniger Energiegehalt aufweist, in der Ladestation (6) verbleibt.

15. Verfahren nach einem der vorhergehenden Patentansprüche 12 bis 14,
**dadurch gekennzeichnet, dass**
falls zwei Akkus (A und B) von einem Benutzer angefordert werden, beide Akkus (A und B) schnell geladen werden und bei dem Herausnehmen des tragbaren elektronischen Geräts (2) aus der Ladestation (6) beide Akkus (A und B) mit dem tragbaren elektronischen Gerät (2) mitgeführt werden.

16. Verfahren nach Patentanspruch 15,
**dadurch gekennzeichnet, dass**
falls zwei Akkus (A und B) von dem Benutzer angefordert werden, eine Überprüfung stattfindet, ob eine Wartezeit eingestellt werden soll und
falls das Ergebnis der Überprüfung positiv ist, beide Akkus (A und B) schnell geladen werden bis beide Akkus (A oder B) vollgeladen sind.

17. Verfahren nach einem der vorhergehenden Patentansprüche 12 bis 16,
**dadurch gekennzeichnet, dass**
ein Anzeigeelement (32) darstellt, wie viel Zeit verbleibt, bis beide Akkus (A und B) vollgeladen sind.
